# EUROPÄISCHE PATENTANMELDUNG

(11) **EP 1 304 552 A1**
(43) Veröffentlichungstag der Anmeldung: **23.04.2003**
(21) Anmeldenummer: 02022690.8
(22) Anmeldetag: 10.10.2002
(51) Int. Cl.: G01G 19/44

(54) **Fettanalysewaage**

(30) Priorität: 18.10.2001 DE 10150923
(71) Anmelder: Beurer GmbH & Co., D-89077 Ulm (DE)
(72) Erfinder: Schade, Uli, 89233 Neu-Ulm (DE); Wanner, Reinhold, 89420 Höchstädt (DE); Meternek. Werner, 89233 Neu-Ulm (DE)
(74) Vertreter: Dr. Weitzel & Partner

(57) **Zusammenfassung**

Die Erfindung betrifft eine Personenwaage zur Körperfettanalyse.

Gemäß der vorliegenden Erfindung ist diese Personenwaage ausgestattet mit den folgenden Merkmalen:
- mit einer Analyseeinrichtung zum Erfassen des Fettgehaltes eines menschlichen Körpers;
- mit einem Gehäuse, die die Analyseeinrichtung umschließt;
- mit einer Oberschale (2), die eine Trittfläche (2.1) aufweist;
- die Trittfläche ist in wenigstens einer Vertikalebene gegen die Fußsohle des Benutzers hin konvex gewölbt;
- es sind in jenem Bereich der Trittfläche der sich am oder nahe dem Fußgewölbe befindet, Messelektroden (4) vorgesehen.

## Beschreibung

Die Erfindung betrifft eine Personenwaage, die es erlaubt, den Fettgehalt des menschlichen Körpers zu erfassen. Die Waage kann gleichzeitig eine Gewichtsanzeige enthalten.

Waagen dieser Art umfassen ein Gehäuse, das eine Einrichtung zum elektronischen und/oder elektrischen Erfassen und gegebenenfalls Auswerten von Messdaten umschließt. Ein wichtiger Bestandteil einer solchen Waage ist die sogenannte Oberschale. Dies ist eine Platte, die eine Trittfläche bildet. Die Trittfläche weist Elektroden auf, die mit dem menschlichen Fuß in unmittelbaren Kontakt gelangen.

Eine große Problematik solcher Fettanalysewaagen besteht in der Genauigkeit und der Reproduzierbarkeit des Analyseergebnisses. Hierbei gibt es zahlreiche Störeinflüsse, die zu Verfälschungen des Messergebnisses führen können. Dazu gehört beispielsweise die Beschaffenheit der Trittfläche der Oberschale mit ihren Elektroden. Aber auch seitens des Benutzers gibt es Parameter, die zu Störungen und Verfälschungen des Messergebnisses führen können. Hierzu gehört beispielsweise der Zustand der Haut im Fußsohlenbereich.

US 2001/0014777 A1 beschreibt eine Personenwaage zur Körperfettanalyse mit einer Oberschale, die eine Trittfläche mit Messelektroden aufweist. Die Trittfläche ist eben.

Eine ähnliche Personenwaage ist in DE 199 43 651 A1 beschrieben.

Es hat nicht an Anstrengungen gefehlt, diese Einflüsse zu verringern. Die Genauigkeit und Reproduzierbarkeit lässt dennoch zu wünschen übrig.

Der Erfindung liegt die Aufgabe zugrunde, eine Fettanalysewaage der genannten Art derart zu gestalten, dass die Genauigkeit und die Reproduzierbarkeit der Messergebnisse gegenüber bekannten Waagen verbessert werden.

Diese Aufgabe wird durch die Merkmale von Anspruch 1 gelöst. Demgemäss wird die Trittfläche der Oberschale einer solchen Waage - in wenigstens einer Vertikalebene gesehen - konvex gewölbt. Die Trittfläche ist demgemäss gegen die Fußsohlenfläche des Benutzers hin ausgebeult. Diese Wölbung oder Ausbeulung kann nach Art einer Zylinderschale gestaltet sein, und zwar derart, dass die Krümmungsachse der Trittfläche quer zur Längsachse des Fußes verläuft. Die Trittfläche kann aber auch in mehr als einer Vertikalebene konvex gewölbt sein. Demgemäss kann sie sphärisch gestaltet sein oder die Gestalt eines Rotationsellipsoids haben. Wesentlich ist dabei eine Annäherung an die Gestalt des Fußgewölbes. So wäre es denkbar, die Trittfläche einem menschlichen Fuß durchschnittlicher Größe und durchschnittlicher Gestalt nachzuempfinden. Im Extremfall könnte sogar daran gedacht werden, die Trittfläche als Abguss eines Fußes eines individuellen Benutzers zu gestalten.

Der Erfinder hat dabei erkannt, dass es auf ein möglichst großflächiges Kontaktieren von Fußsohlenfläche und Trittfläche ankommt. Die Berührungszone zwischen Fußsohlenfläche und Trittfläche soll satt und großflächig sein. Auch wird dabei angestrebt, den pro Flächeneinheit zwischen Fuß und Trittfläche herrschenden Druck möglichst gleichmäßig zu machen.

Weiterhin ist es zweckmäßig, jedenfalls auch im Bereich des Fußgewölbes Elektroden in der Trittfläche vorzusehen.

Eine solche erfindungsgemäße Gestaltung der Trittfläche führt zu folgendem Ergebnis:
1. Durch die Wölbung der Trittfläche ist das Gewicht auf eine größere Fläche verteilt, dadurch ergeben sich genauere Gewichtsmessungen, da die Trittfläche eine geringere Verformung erfährt.
2. Der Nutzer steht sicher auf der Waage, als hätte er einen Schuh an. Durch das resultierende ruhigere Stehen ist auch die Messung genauer. Ein unruhiger Stand bei den herkömmlichen Waagen führt zu Messungenauigkeiten. Die Hardware bekommt ein saubereres Signal von den Sensoren, und damit stehen der Software sehr "ruhige" bzw. ungestörte Messwerte zur Verfügung, die dann zu einer präzisen Berechnung des Gewichtes und des Fettwertes herangezogen werden.
3. Die Anordnung der Elektroden im Bereich der Fußgelenkswölbung ergeben einen besseren Kontakt zur Fußfläche und dadurch genauere Messergebnisse bei der Körperfettmessung.
4. In der Fußgelenkswölbung ist der Übergangswiderstand zwischen Elektroden und Haut geringer, da hier weniger Hornhaut gebildet wird als im Fersen- und Vorderfußbereich. Hornhaut ist elektrisch gesehen ein großer Widerstand. Dies ist das Hauptproblem bei herkömmlichen Körperfettwaagen, was zu Fehlmessungen oder Ungenauigkeiten im Messergebnis führt.
5. Die Stabilität der gewölbten Oberschale ist größer als die einer flachen Oberschale, dadurch wird die Gewichtsmessung (bessere Lastverteilung) und die Körperfettmessung (besserer Elektrodenkontakt, Oberschale gibt nicht nach) verbessert. Auch ist wegen dieser Stabilitätsverbesserung eine Materialeinsparung möglich.

Es hat sich ferner als sehr zweckmäßig erwiesen, statt des bisher verwendeten Kunststoffes die Trittfläche aus einem harten Werkstoff herzustellen. Dieser Werkstoff kann beispielsweise Metall sein. Es käme ein Verbund aus einem Metallblech in Betracht, das die Trittfläche bildet, mit der übrigen Oberschale aus Kunststoff. Es kommt aber auch in Betracht, die Trittfläche aus Glas oder Glaskeramik zu bilden. All dies hat folgende Vorteile:

Das harte Material gibt beim Betreten der Waage nicht nach. Dies bedeutet, dass sich die Elektroden stark und gleichmäßig in die Fußsohlen eindrücken können. Der Kontakt zwischen Fußsohle und Elektroden wird verbessert. Dadurch wird der Übergangswiderstand zwischen dem menschlichen Fuß und der Elektrode stark verringert. Hingegen findet keine Verformung der Trittfläche statt.

All dies führt zu einer deutlichen Verbesserung der Genauigkeit des Messergebnisses.

Grundsätzlich kommen somit für die Bildung der Trittfläche jegliche Materialien in Betracht, vorausgesetzt sie haben die notwendige Härte und Geschlossenheit der Oberfläche. Die Stabilität und die Härte der Trittfläche sollten nach Möglichkeit hoch sein. Die Härte sollte beispielweise in der Größenordnung der Härte von Fensterglas liegen, mit einer Abweichung nach oben und nach unten von 10 Prozent, maximal 20 Prozent.

Die Erfindung ist anhand der Zeichnung näher erläutert. Darin ist im einzelnen folgendes dargestellt:

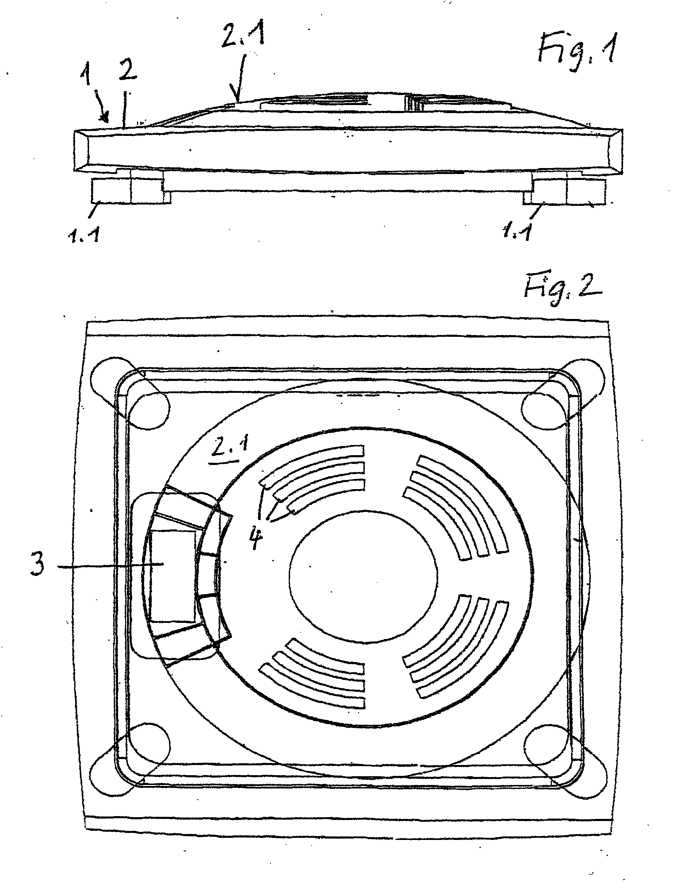

- Figur 1: zeigt eine Personenwaage zur Körperfettanalyse in einer Seitenansicht.
- Figur 2: zeigt den Gegenstand von Figur 1 in Draufsicht.

Die Waage weist die folgenden Bauteile auf: Ein Gehäuse 1 trägt eine Oberschale 2. Die Oberschale 2 weist eine Trittfläche 2.1 auf. Die Trittfläche 2.1 ist gewölbt. Die Wölbung ist sphärisch.

Das Gehäuse ist von vier Füßen 1.1 getragen.

Ein Display 3 zeigt die erfassten Werte an. In die Trittfläche 2.1 eingelassen sind mehrere Elektroden 4. Diese haben die Gestalt von Kreissegmenten. Sie sind in gleichem gegenseitigem Abstand konzentrisch zur Trittfläche 2.1 angeordnet. Im übrigen besteht die Trittfläche 2.1 aus einem harten Werkstoff, zum Beispiel aus besonders hartem Kunststoff, aus Metall oder Glas.

Die Trittfläche könnte auch die Gestalt einer Zylinderschale haben oder eines Rotationsellipsoids. Dabei ist die Trittfläche derart gestaltet, daß die Krümmungsachse im wesentlichen horizontal verläuft sowie quer zu den Längsrichtungen der Füße des Benutzers.

## Patentansprüche

1. Personenwaage zur Körperfettanalyse;
1.1 mit einer Analyseeinrichtung zum Erfassen des Fettgehaltes eines menschlichen Körpers;
1.2 mit einer Oberschale (2), die eine Trittfläche (2.1) aufweist;
1.3 die Trittfläche ist in wenigstens einer Vertikalebene gegen die Fußsohle des Benutzers hin konvex gewölbt;
1.4 es sind in jenem Bereich der Trittfläche, der sich am oder nahe dem Fußgewölbe befindet, Messelektroden (4) vorgesehen.

2. Personenwaage nach Anspruch 1, **dadurch gekennzeichnet, dass** auch außerhalb des Fußgewölbebereiches Messelektroden (4) vorgesehen sind.

3. Personenwaage nach Anspruch 2, **dadurch gekennzeichnet, dass** die Elektroden (4) wenigstens annähernd gleichmäßig über die Fläche der Fußsohle verteilt angeordnet sind.

4. Personenwaage nach einem der Ansprüche 1 bis 3, **dadurch gekennzeichnet, dass** die Trittfläche (2.1) sphärisch gestaltet ist.

5. Personenwaage nach einem der Ansprüche 1 bis 3, **dadurch gekennzeichnet, dass** die Trittfläche (2.1) wenigstens annähernd die Gestalt einer Zylinderhalbschale aufweist, und dass die Krümmungsachse quer zur Längsrichtung des Fußes des Benutzers verläuft.

6. Personenwaage nach einem der Ansprüche 1 bis 3, **dadurch gekennzeichnet, dass** die Trittfläche (2.1) der Fußsohle eines durchschnittlich gestalteten menschlichen Fußes angepasst ist.

7. Personenwaage nach einem der Ansprüche 1 bis 3, **dadurch gekennzeichnet, dass** die Trittfläche (2.1) ein Abdruck der Fußsohle eines individuellen Benutzers ist.

8. Personenwaage nach einem der Ansprüche 1 bis 7, **dadurch gekennzeichnet, dass** die Oberschale (2) zumindest im Bereich der Trittfläche aus Glas besteht.

9. Personenwaage nach einem der Ansprüche 1 bis 7, **dadurch gekennzeichnet, dass** die Oberschale wenigstens im Bereich der Trittfläche aus einem Material besteht, dessen Härte mit einer Abweichung von +/- 20 Prozent.
